# EUROPEAN PATENT APPLICATION

(11) **EP 3 671 189 A2**
(43) Date of publication of application: **24.06.2020**
(21) Application number: 19209898.6
(22) Date of filing: 19.11.2019
(51) Int. Cl.: G01N 23/046, G01N 29/30

(54) **TESTCOMPONENT FOR NON-DESTRUCTIVE TESTING**

(30) Priority: 30.11.2018 GB 201819508
(71) Applicant: Airbus Operations Limited, Bristol BS34 7PA (GB)
(72) Inventor: Narayanan, Venkatasubramanian, Bristol,, BS34 7PA (GB); Bond-Thorley, Andrew, Bristol,, BS34 7PA (GB); Eden, James, Bristol,, BS34 7PA (GB)
(74) Representative: Hucker, Nerys

(57) **Abstract**

A method of manufacturing a test component and a method of testing a test component for non-destructive testing (NDT) together with a method of validating an NDT process for a component manufactured by an additive manufacturing (AM) process are disclosed. The validation method includes the steps of forming a first test specimen by the AM process, the test specimen containing one or more defects of a specified type and size, confirming both by destructive testing and by a first NDT step the type and size of the defects, forming the component by the said AM process with an aperture to receive the test specimen, forming a second test specimen by the same AM process which contains defects of the same type and size, inserting into the aperture the second test specimen, arranging the performance of a second NDT step on the component for defects, and comparing the results of the first and second NDT steps to validate the method.

## Description

### FIELD OF THE INVENTION

The present invention relates to non-destructive testing (NDT) of components and in particular to the validation of an NDT technique for additive manufactured components.

### BACKGROUND

Additive manufacturing (AM) presents a challenge for existing NDT methods. This new process and material characteristics together with tight defect acceptance criteria, in particular when used for the manufacture of aerospace components, all require detailed evaluation and validation of suitable NDT techniques.

The AM process can produce a wide range of defect indication types including cracks, distributed porosity, single pores, inclusions, solid inclusions and lack of fusion. The effect on material performance of these indication types is not yet well understood and therefore the accurate detection of such defects is vital.

The only currently available inspection methods are X-ray and microfocus X-ray computer tomography (CT). These processes can have limitations such as detecting defects at varying orientations to the X-ray beam, scattering of the X-ray beam and beam hardening artifacts, X-ray tube energy, and system resolution. All these limitations make the meeting of process acceptance criteria difficult. Furthermore, components may be built at different orientations from each other and each component may therefore have a different layer direction which may lead to different defect orientation from other components.

Owing to the above challenges, there are currently no proper guidelines and standards to describe a reliable NDT qualification process, for AM parts. When key structural components are supplied to a manufacturer by an external supplier, it is vital that the supplier uses an NDT testing procedure which can be validated and approved by the manufacturer. It is an object of the invention to provide means to make available an improved NDT process and an improved method of validating an NDT process for AM components.

### SUMMARY OF THE INVENTION

According to a first aspect of the present invention there is provided a method of manufacturing a test component for NDT including the steps of forming the component with an aperture shaped to receive a test specimen formed with least one defect and inserting a said test specimen into the said aperture.

Thus, according to the invention, test specimens positioned within the actual component are used, rather than separate conventional Probability of Detection specimens or the Reference Standard approach. The use of such test components, whether for simple non-destructive testing or for validating an NDT process, will prove that the testing procedure is able to correctly identify defects in the test component itself, not just in a test specimen. This fact will provide greater confidence in a validation process for the NDT method.

The test specimen or the component may be formed by an AM process.

The aperture may be formed in the component whereby the at least one defect in the test specimen, when inserted, will be positioned within the component at a location likely to be subject to defects of said component or likely to be more challenging to inspect, in production manufacturing.

A series of test specimens may be inserted into respective apertures in the component at locations likely to be subject to defects.

The test specimen may be inserted into the aperture as an interference fit, a sliding fit or if desired a loose fit.

One of the test specimen and the component may be formed with a relief whereby to allow escape of gas as the test specimen is inserted into the component. Such a relief may take any suitable form, for example a V-shaped groove, a semi-circular groove or any other suitable shape.

The test specimen may be formed as a generally cylindrical plug.

The test specimen may be formed with at least one defect selected from the group: crack, distributed porosity, single pore, inclusion and lack of fusion.

According to a second aspect of the present invention there is provided a method of validating an NDT process for a component manufactured by an AM process, the method including the steps of, forming by an AM process a first test specimen containing at least one defect of a specified type and size, measuring by a first NDT step the type and size of the at least one defect in the first test specimen, manufacturing a test component for NDT according to the method of any preceding claim, said test component having a second said test specimen inserted therein, said second test specimen containing at least one defect of the same type and size as that of the first test specimen, arranging the performance of a second NDT step on the test component for defects, and comparing the results of the first and second NDT steps to validate the method.

An NDT step may be performed on the second test specimen before insertion into the component. Thus, the entity which is validating the NDT process carried out on the test component may perform its own NDT on the second test specimen as well as the first test specimen, in order to ensure that the second test specimen not only nominally contains the same defects as the first test specimen but has been measured, before insertion into the test component, as doing so.

The first and second NDT steps preferably comprise CT scanning to give the required level of accuracy of defect detection. The first NDT step preferably includes micro CT scanning with higher resolution to give an enhanced level of confidence in the accuracy of the first NDT step.

The first test specimen may additionally be destructively tested to measure the type and size of the at least one defect. This additional step will identify beyond any doubt the type and size of defect present in the test specimen and so lead to the greatest possible level of confidence in a validation process for NDT testing.

According to a third aspect of the invention there is provided a method of testing a test component manufactured according to the method of the first aspect, the method including the performance of an NDT step on the test component for defects in the test specimen.

### BRIEF DESCRIPTION OF THE DRAWINGS

The present invention will now be described, by way of example only, with reference to the following drawings in which:-
Figure 1 is an isometric view from below of a failsafe bracket for an aircraft, defining a circular aperture to receive a test specimen, for use according to the process of the invention;
Figure 2 is an isometric view of a cylindrical test specimen for use according to the process of the invention in the failsafe bracket of Figure 1 and drawn to a larger scale;
Figure 3 is a top plan view of the test specimen of Figure 2;
Figure 4 is a side sectional view of the test specimen of Figure 2, "Cylinder 1", taken along the line C-C and showing a first range of spherical defects;
Figure 5 is the same sectional view as Figure 4 of a second test specimen, "Cylinder 2", showing a second range of spherical defects, and
Figure 6 is the same sectional view as Figure 4 of a third test specimen, "Cylinder 3", showing a range of linear defects.

### DETAILED DESCRIPTION OF THE INVENTION

As an example of where the method of the invention may be used, a manufacturer may be a supplier of components to a manufacturer of assemblies containing those components, for example an aircraft manufacturer. In order for the assembly manufacturer to confirm the failsafe component quality during production by the component supplier, the assembly manufacturer will have to depend on the NDT techniques used by the component supplier. Such techniques need to be validated to qualify the supplier's NDT facility against the relevant acceptance criteria for the component.

For example, one acceptance criterion may be that the supplier is able reliably to detect a defect within the component such as gas porosity/less dense inclusions down to 500µm or less and solid inclusions/lack of fusion down to 150µm diameter or less.

Thus, AM of a test specimen formed with voids or inclusions of a known size and shape, insertion of that test specimen into an actual component and the requirement for the supplier to itself test the component for defects, can be used to ascertain whether the supplier's test methods are able reliably to detect such a defect. The precise size and shape of the known defects can be checked by the assembly manufacturer by high resolution micro CT testing and/or destructive testing.

Well known destructive testing methods, such as micrographic inspection after dissection of the test specimen, may be carried out by the assembly manufacturer. Following the destructive testing, a further test specimen would be manufactured by AM to a specification identical to that of the test specimen destructively tested. That further test specimen would then be inspected by high resolution CT scanning and inserted into the test component for testing by the supplier or NDT service provider. Comparison of the supplier's test results and the assembly manufacturer's test results would then enable validation of the supplier's test methods and their NDT capabilities.

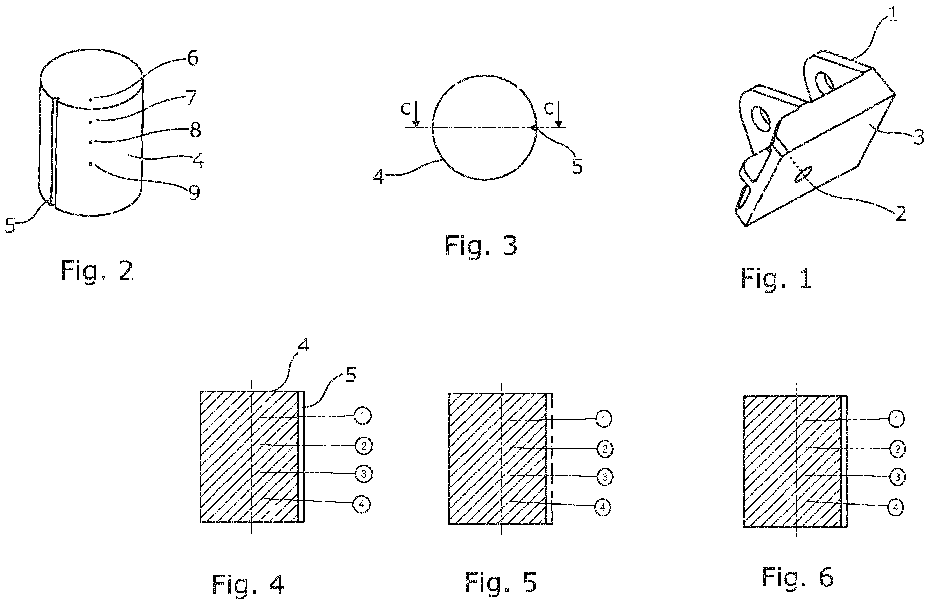

With reference to figure 1, a failsafe bracket 1 for structural analysis is manufactured by an AM electron beam powder bed process out of Ti6A14V material. The component 1 has a cylindrical aperture 2 formed through a lower surface 3 thereof. The aperture 2 is formed as the component 1 is being manufactured but could be drilled instead. Referring to Figure 2, a cylindrical test specimen 4 is formed of the same material by the same AM process and is shaped to be inserted as an interference fit into the aperture 2, in the direction of the arrow. Alternatively, a close sliding fit may be adequate in certain circumstances. The test specimen 4 may be surface finished by any suitable process if necessary, in order to form a smooth cylindrical surface for insertion into the aperture 2 of the bracket 1. Although only one aperture 2 is shown in Figure 1, the component may be formed with as many apertures as are required to accommodate test specimens. For example, the manufacturing process may tend to form defects at locations in the region of a thickening of the structure, such as at the location of the aperture 2, shown in Figure 1. In such a case, apertures may be formed and test specimens inserted at all or a representative sample of such locations in the structure.

The test specimen 4 has a V-shaped groove 5 formed along its length to act as an air escape channel as the test specimen is pressed into the aperture 2 of the bracket 1.

The test specimen 4 has been deliberately formed with a variety of defects 6, 7, 8, 9, during the AM process and these defects are discussed below in relation to Figures 4, 5 and 6 and cylinders 1, 2 and 3, respectively. All defects are centrally positioned within the test specimen 4.

Table 1, relating to Cylinder 1 as illustrated in Figure 4, shows the diameter of four spherical defects intentionally formed during the AM manufacturing process of the test specimen 4.

Table 2, relating to Cylinder 2 as illustrated in Figure 5, shows the diameter of four further spherical defects intentionally formed during the AM manufacturing process of the test specimen 4.

Table 3, relating to Cylinder 3 as illustrated in Figure 6, shows the dimensions of four linear defects intentionally formed during the AM manufacturing process of the test specimen 4. The linear defects are all 500µm in length but their orientation within the test specimen differs as do their widths and thicknesses.

**TABLE 1 (CYLINDER 1)**

| Defect reference | Nominal diameter |
|---|---|
| 1 | 150µm |
| 2 | 200µm |
| 3 | 300µm |
| 4 | 400µm |

**TABLE 2 (CYLINDER 2)**

| Defect reference | Nominal diameter |
|---|---|
| 1 | 500µm |
| 2 | 600µm |
| 3 | 800µm |
| 4 | 1000µm |

**TABLE 3 (CYLINDER 3)**

| Defect reference | Angle to horizontal | Length | Width | Thickness |
|---|---|---|---|---|
| 1 | 0 | 500µm | 200µm | 200µm |
| 2 | 45 | 500µm | 200µm | 200µm |
| 3 | 0 | 500µm | 300µm | 300µm |
| 4 | 45 | 500µm | 300µm | 300µm |

Depending upon the specific requirements of the component concerned, the test specimens 4, shown in Figures 4, 5 and 6, may be inserted into separate apertures in a single component 1 or, in sequence, into a single aperture in a component 1. All the test specimens may not be required, however, if it is determined that not all of the defects listed above are likely to occur in the component concerned. Thus, for example, a single test specimen may contain two spherical defects of differing diameter and two linear defects of differing length. The type and size of defect created in the test specimen and the number of test specimens used will always depend upon a specific need for the supplier or other entity whose NDT capabilities are being tested to identify defects of a specific type and size for a particular component of a given size and geometry.

The embodiments described herein are respective non-limiting examples of how the present invention, and aspects of the present invention, may be implemented. Any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined by the accompanying claims.

The word "or" as used herein is to be taken to mean "and/or" unless explicitly stated otherwise.

## Claims

1. A method of manufacturing a test component for NDT including the steps of forming the component (1) with an aperture (2) shaped to receive a test specimen (4) formed with least one defect (6;7;8;9) and inserting a said test specimen into the said aperture.

2. A method according to claim 1, in which the test specimen (4) and component (1) are formed by an AM process.

3. A method according to claim 1 or 2, in which the aperture (2) is formed in the component (1) whereby the at least one defect (6;7;8;9) in the test specimen (4), when inserted, will be positioned within the component at a location likely to be subject to defects of said component, in production manufacturing.

4. A method according to claim 3, in which a series of test specimens are inserted into respective apertures in the component at locations likely to be subject to defects.

5. A method according to claim 1, 2 or 3, in which the test specimen (4) is inserted into the aperture (2) as an interference fit.

6. A method according to claim 1, 2 or 3, in which one of the test specimen (4) and the component (1) is formed with a relief (5) whereby to allow escape of gas as the test specimen is inserted into the component.

7. A method according to any preceding claim, in which the test specimen (4) is formed as a generally cylindrical plug.

8. A method according to any preceding claim, in which the test specimen (4) is formed with at least one defect (6;7;8;9) selected from the group: crack, distributed porosity, single pore, inclusion and lack of fusion.

9. A method of validating an NDT process for a component manufactured by an AM process, the method including the steps of, forming by an AM process a first test specimen containing at least one defect of a specified type and size, measuring by a first NDT step the type and size of the at least one defect in the first test specimen, manufacturing a test component for NDT according to the method of any preceding claim, said test component having a second said test specimen inserted therein, said second test specimen containing at least one defect of the same type and size as that of the first test specimen, arranging the performance of a second NDT step on the test component for defects, and comparing the results of the first and second NDT steps to validate the method.

10. A method according to claim 9, in which at least one of the first and second NDT steps comprises CT scanning.

11. A method according to claim 9 or 10, in which the first NDT step includes micro CT scanning.

12. A method according to claim 9, 10 or 11, in which the first test specimen is additionally destructively tested to measure the type and size of the at least one defect.

13. A method according to any of claims 9 to 12, in which an NDT step is performed on the second test specimen before insertion into the component.

14. A method of testing a test component manufactured according to the method of any of claims 1 to 8, the method including the performance of an NDT step on the test component for defects in the test specimen.
